# EUROPEAN PATENT APPLICATION

(11) **EP 1 467 029 A2**
(43) Date of publication of application: **13.10.2004**
(21) Application number: 04006317.4
(22) Date of filing: 17.03.2004
(51) Int. Cl.: E02B 3/12

(54) **Turf reinforcement mat composite**

(30) Priority: 08.04.2003 US 408454
(71) Applicant: Colbond B.V., 6827 AV Arnhem (NL)
(72) Inventor: Goodrum, Richard, Asheville North Carolina 28805 (US); Chirbas, Kurt, Granite Bay California 95746 (US)
(74) Representative: Oberlein, Gerriet

(57) **Abstract**

**Summary:**

A turf reinforcement mat composite includes a turf reinforcing support mat core and an integrally attached fiber matrix.

## Description

This invention relates to immediate soil erosion control and long term turf or vegetation reinforcement.

Seed mats and fiber blankets, used to establish and nurture the growth of vegetation in a seed bed, provide advantages over direct seeding of soil. Seed mats and fiber blankets prevent soil erosion, caused by flowing water, by collecting and depositing soil. Seed mats and fiber blankets that include fabrics provide shade to germinating seeds and retain moisture. Biodegradable materials, such as straw, jute, wood fibers or coconut fibers, in seed mats and fiber blankets provide some aid in moisture retention. Geosynthetic nets and/or meshes in seed mats provide permanent support and reinforcement for roots of vegetation.

Turf Reinforcement Mat (TRM) composites provide immediate and long-term protection against soil erosion by combining temporary and long-term components. Temporary, immediate protection generally refers to protection that is intended to last until vegetation begins or until germination is complete. Once vegetation begins or germination is complete, temporary immediate protection is no longer required. Permanent, long term protection generally refers to protection that is intended to last for the life of the project. This can be from a few years to several years or longer. The permanent, long-term protection can be maintained as needed, for example, by repair and replacement.

Known TRM composites are fabricated by stitching a loose, natural (e.g., biodegradable) or synthetic (e.g., non-biodegradable) fiber layer between two or more netting layers. Thus, many known TRM composites are actually three or more non-integral entities held together by stitching. Known TRM composites generally exhibit a low to moderate resistance to shear stresses, in the range of 2-3 psf (95.76 - 143,64 Pa) in the unvegetated state.

Resistance to shear stresses, such as environmental shear stresses, is a characteristic used to describe the erosion control capabilities of TRM composites. Shearing stress or strain can be defined as the deformation of a body, such as a soil bed, caused by forces that produce an opposite but parallel sliding motion of the body's planes. Forces capable of producing shearing stress or strain include environmental forces, such as rain and wind, and other natural or man-made forces. Although there is one standard test for evaluating resistance to shear stresses, alternative techniques are often used.

The standard technique (ASTM D6460) involves determining the displacement of soil placed on a flume, and shall be hereinafter referred to as the "flume test." In the flume test, a flume is set at a desired angle and soil is placed within the flume. The erosion control product is secured on top of the soil, and water is allowed to (or is forced to) flow down the flume, over the product. The shearing stress applied by the running water dislodges soil, which is collected and weighed. The raw data is then converted to resistance to shear stresses, for example, in pounds per square feet (psf), and can be compared to corresponding values for other products. High soil loss is indicative of a low resistance to shear stresses, and low soil loss is indicative of a high resistance to shear stresses.

One alternative technique involves determining the displacement of soil placed in a tub, and shall be referred to hereinafter as the "tub test." In the tub test, buckets of soil are placed within a tub (e.g., 6-foot (182.88 cm) diameter tub) and the erosion control product (e.g., TRM composite) is secured on top of the soil. Water (e.g., two to three feet (60.96 to 91.44 cm)) is applied on top of the product, and a device (e.g., a paddle, a propeller, an impeller) rotates the water, causing the water to rush over the soil. The shearing stress applied by the paddle and water dislodges soil, which is collected and weighed. The raw data is then converted to resistance to shear stresses, for example, in pounds per square feet (psf), and can be compared to corresponding values for other products. High soil loss is indicative of a low resistance to shear stresses. Conversely, low soil loss is indicative of a high resistance to shear stresses.

Regardless of the technique, the conditions under which testing is conducted can vary. Some examples of variables that affect testing include the state of vegetation (e.g., vegetated vs. unvegetated), weather conditions (e.g., rain and wind), and other natural or man-made factors. Due to this potential for variation between different types of tests, and within the same type of test, products that are tested by different techniques or under different conditions (e.g., high velocity flows or low velocity flows) are often compared using general terms. For example, in the event that products are tested by different techniques and/or under different conditions, the products may be classified as providing low, moderate or high erosion protection, and thus can still be compared generally to one another by those of ordinary skill in the art.

A first example of a TRM composite that has been sold is a composite matting that includes a three-dimensional matrix of polymer filaments bonded together at interstices of the filaments and a matrix of biodegradable coconut fibers. The matting also includes a geosynthetic webbing or open mesh as a third layer. The coconut fiber matrix is placed between the three-dimensional matrix and the open mesh; the three-dimensional matrix, the coconut fiber matrix, and the geosynthetic webbing or open mesh are secured by stitching with a UV stabilized multifilament polypropylene thread. The composite matting is placed over the prepared soil of a seed bed, preferably by placing the open mesh in contact with the prepared soil. A second example of a TRM composite that has been sold is a composite matting that includes a cuspated product stitched together with grass and netting. A third example of a TRM composite that has been sold is a composite matting that includes various netting stitched together.

U.S. Patent No. 5,849,645 to Lancaster (Lancaster), incorporated herein by reference in its entirety, discloses a reinforced composite matting including a fiber matrix of coconut or recycled synthetic fibers held in place by a net reinforcement including a heavy weight bottom netting, a heavy weight cuspated netting having alternating ridges and troughs extending in a substantially parallel relation across the width of the cuspated netting, and an optional heavy weight top netting. The bottom netting, the top netting and the cuspated netting each preferably form a grid of uniformly spaced apertures. Sandwiched between the bottom netting and the cuspated netting is a fiber matrix, formed of elongated strands of commercially available fibers, such as of coconut fibers or recycled synthetic fibers. The bottom netting, the fiber matrix, the cuspated netting and the top netting are preferably secured together by stitching strands of thread in spaced relation tangent to the plurality of ridges and troughs formed in the cuspated netting. Lancaster requires the presence of at least two nettings, with a fiber matrix sandwiched between the two nettings, all held together by stitching.

US 4,181,450 to Rasen et al. discloses a porous, reinforced, erosion control matting. The matting is formed by a three-dimensional looped structure of synthetic filaments. The matting includes a backing of web or fabric that is bonded to at least some of the filaments, and includes a reinforcing facing member extending parallel to the backing. The reinforcing facing member provides an upper surface of crossbars onto which the looped structure filaments interlock. The fabric backing can be a non-woven, polyamide, tangled fibrous web, and the reinforcing member can be formed of plastic filaments. The presence of some adhesive or other bonding means is also of value in the attachment or holding of the backing onto the synthetic polymer filaments.

US 5,759,929 to Ikezawa et al. discloses a bio-degradable, composite, nonwoven fabric for plant cultivation that includes a wood pulp paper sheet laminated on a bio-degradable, aliphatic, polyester filament non-woven fabric. The polyester filaments and the pulp fibers are entangled to each other and a plurality of spot regions, which are spaced from each other, are substantially free from the pulp fibers, and have a decreased distribution density of the polyester filaments. The continuous polyester filaments and the wood pulp fibers are three-dimensionally entangled with each other to form the composite non-woven fabric.

Applicants have identified a need for a new product that meets the requirements of immediate erosion control (preventing soil loss), long term protection (turf reinforcement) and improved germination (moisture absorption).

Embodiments of the present invention provide a TRM composite composed of at least two layers: a support mat and a fiber matrix (FM). In an exemplary embodiment, the FM is in a position to directly contact soil. The FM penetrates into the support mat, promoting at least some interlocking between the FM and the support mat. The TRM composite of the invention provides the benefits of both temporary mulches and a permanent TRM. Additional layers may optionally be applied over the support mat.

In embodiments, the support mat and the FM are made independently of one another. The FM is then applied onto and/or into the support mat, and at least some of the fibers of the FM mechanically interlock with at least some of the filaments of the support mat. The TRM composite may then be heated to a temperature at which the fibers, the filaments or both the fibers and the filaments at least partially melt, thereby bonding the FM to the support mat.

In embodiments, the support mat is formed and the fibers are subsequently sprayed into the support mat, where the fibers interlock with the filaments of the support mat. The support mat and fibers are then heated to a temperature at which the fibers or both the fibers and the filaments at least partially melt, thereby forming the FM and bonding the FM to the support mat.

In various embodiments, the formation of the FM may involve any or all of physical interlocking, mechanical fastening, thermal bonding and chemical bonding. In various other embodiments, the attachment of the FM to the support mat to form the TRM composite of the invention may involve any or all of physical interlocking, mechanical fastening, thermal bonding and chemical bonding. Other methods of attaching the FM and the support mat to one another may be used to integrally attach the FM to the support mat, thereby forming a single entity that cannot be separated into individual components without destroying the individual components.

In alternate embodiments, the FM can be hydraulically applied to the support mat in the field. In these alternate embodiments, the support mat is positioned to be in contact with the soil and a mix of ground wood, fertilizer, seed and a gum/tackifier is sprayed over the support mat. In various embodiments, self-bonding of the fibers of the FM is sufficient to integrally attach the FM to the support mat. In various other embodiments, a bonding agent is used that is activated when hydrated, thereby forming a permeable crust that holds the FM to the support mat. These alternate embodiments generally exhibit a low to moderate resistance to shear stresses, of approximately 1.5 psf (71.82 Pa) in the unvegetated state.

In embodiments, the FM is a layer of mulch, mixed with a tackifier or bonding agent. Preferably, the FM is made of natural and/or synthetic fibers, at least one filler, at least one bonding agent, and optionally at least one of fertilizers, seeds and other additives. In various embodiments, the fibers serve as the bonding agent, bonding the fiber matrix to itself to interlock the fiber matrix with the support mat. In various other embodiments, the fiber matrix is bonded to the support mat with an activatable binder that becomes polymeric upon hydration. Preferably, the protective micro-environment of the FM enhances germination while lasting long enough for the vegetation to be established. Further, preferably, the FM at least does not hinder the germination process. Further, preferably, the FM enhances the germination process by moisture absorption.

In various embodiments, the support mat is a turf reinforcing core having a geometry designed to enhance the micro-environment for seed germination and erosion protection. Preferably, the support mat has a three-dimensional, entangled filament structure. Preferably, the core is natural and/or synthetic filaments that are bonded or fused together at their interstices. Three-dimensional support mat cores, such as those described in U.S. Patents Nos. 5,849,645, 4,212,692, 4,252,590 and RE 31,599, all incorporated herein by reference in their entirety, may also be used. The support mat provides strength and stability to the TRM composite.

In various embodiments, the natural fibers and filaments may be, but are not limited to, wood fiber (e.g., excelsior and wood wool), wood pulp fibers, jute fiber, palm fiber, peat, peat moss, sisal, coconut fiber, potato wastes, wheat, straw, rice straw, hemp, cotton, grass clippings, wood chips and any combination thereof.

In various embodiments, the synthetic fibers and filaments may be, but are not limited to, nylons; polyesters; polypropylene; polyethylene; polyolefins; polyamides; polycaprolactam; polyethylene terephtalate; polyhexamethylene adipamide; cellulose; modified cellulose, nitrated cellulose (e.g., nitrocellulose), rayon, cellophane (e.g., from cellulose xanthate) and precursors thereto (e.g., alkaline cellulose); cotton; and any combination thereof.

In embodiments, the support mat further includes at least one known or later developed UV protector. Preferably, the UV protector absorbs light with wavelengths of approximately 490 to 570 nm, in order to give the TRM Composite a green color. In various embodiments, the UV protector is also an antioxidant.

In various embodiments, the at least one bonding agent may be, but is not limited to, cyanoacrylates; natural sizes and glues, such as bone size, fish size, skin size, casein glue, flox glue, rosin glue, marine glue, holly glue, mistletoe glue, English size, Flanders size, ossein size and Russian size; animal or vegetable protein, gelatins, albumins and caseins; sugars such as saccharose, glucose and honey; polysaccharides such as starch and its water-soluble derivatives, animal and vegetable proteins; the alginates, the carrageinates, dextran, dextrin, pectin, chitin and its water-soluble derivatives, gum arabic, caroubier gum, guar gum, Indian gum, kasaya gum, lacquer gum, larch gum, Senegal gum, Tamarind gum, tragacanth gum, xanthane gum, methyl celluloses, hydroxyalkyl celluloses, carboxymethyl celluloses and cellulose esters; asphalts, waxes and paraffins; natural or synthetic rubbers such as latex, polybutadienes, polyisoprenes and polychloroprenes; polyamides such as polyacrylamide; sodium silicate; synthetic homopolymeric or copolymeric waxes and resins such as the polyalkylenes, polyvinyl alcohols, polyvinyl esters, polyvinyl ethers, polyvinyl acetals, polystyrenes, polyvinyl pyrrolidones, polyacrylic esters, polymethacrylic esters, polyallylic esters, polycaprolactams, polyhexamethylene adipamides, polymethylene sebacamides, polyurethanes, polyacrylonitriles, ureaformaldehyde resins, urea-melamines, phenol-formaldehyde and phenol-butyraldehyde, epoxide resins, maleic polyesters, phthalic polyesters and abietic polyesters.

In embodiments, the bonding agent is an activatable binder that becomes polymeric upon activation. In various embodiments, the bonding agent is activated when hydrated, and forms a permeable crust that protects newly sown seed and prevents soil loss. Upon installation of the TRM Composite, the bonding agent can be activated by hydrolysis to hold the FM together and/or to hold the FM to the support mat.

In various embodiments, the bonding agent may contain a plasticizer such as, but not limited to, adipates, dibutyl, dihexyl, dicyclohexyl, dioctyl, didecyl or diphenyl phthalates and sebacates; isopropyl, butyl and isobutyl myristates, palmitates and stearates; triphenyl, tricresyl, tributyl, trihexyl, tricyclohexyl, trioctyl, tridecyl and tridodecyl phosphates; polyethylene glycols; polypropylene glycols; polybutylene glycols; mono-, di- and tri-esters formed from glycerol and fatty carboxylic acids; esters formed from lower alkanols and citric acid; the condensation products of ethylene or propylene oxide on to alkylphenols, on to fatty alcohols and on to vegetable oils. When the adhesive is water-soluble and a plasticizer is used, the latter is preferably selected from those that are soluble in water.

In various exemplary embodiments, the mat may include at least one fertilizer including, but not limited to, alginate fibers; nitrogen; phosphorus and potassium releasing materials; water-soluble fertilizer containing at least one composition selected from the group consisting of: urea and its soluble derivatives, alkali and ammonium salts formed from nitric acid or phosphoric acid, and ammonium and potassium salts formed from agriculturally acceptable acids or precursors thereof; and water-insoluble fertilizer containing at least one composition selected from the group consisting of: cyanuramide, ammoniated Leonardite, metallic ammonium phosphates, phosphazenes and substantially polymerized compositions formed from urea and formaldehyde, acetaldehyde, isobutyraldehyde, crotonaldehyde and glyoxal.

In various exemplary embodiments, the invention may also include additives, including but not limited to, at least one gel substance for water retention; trace elements; algicides; fungicides; insecticides; nematocides and growth regulators.

Embodiments of the invention will be described with reference to the following drawings, wherein:

Fig. 1 is a photograph of a top view of an embodiment of a TRM composite according to the invention;

Fig. 2 is a photograph of a side view of the TRM composite of Fig. 1;

Fig. 3 is a photograph of a top view of an embodiment of a FM of the TRM composite of Fig. 1;

Fig. 4 is a photograph of a top view of an embodiment of a support mat of the TRM composite of Fig. 1; and

Fig. 5 is a photograph of a side view of the support mat of Fig. 4.

Applicants have discovered several flaws in known seed mats and fiber blankets. In particular, many known seed mats and fiber blankets do not provide appropriate protection, have an undesirably prolonged degradation process, provide inadequate immediate temporary erosion control protection, and do not enhance the germination process.

Applicants have also discovered several flaws in known TRM composites. One flaw in known TRM composites is the stitching of three or more non-integral components together to form the composite. When the stitching that holds the components of the TRM Composite together fails, such as upon cutting during installation, the integrity of the product is compromised and product failure becomes imminent.

In addition, Applicants have determined that the density of the in-fill, whether natural or synthetic, generally has an impact on the performance of the product. Many known TRM composites have in-fill densities that are dense or highly variable. A product that has a dense in-fill (e.g., that of Lancaster) has a slow rate of fiber degradation that often results in the inability of grass and roots to grow through the in-fill, and thus vegetation is retarded or prevented. The result is adequate performance short term but very poor performance long term. Alternatively, a product that has highly variable in-fill densities results in excessive soil losses short term and poor performance in the long term.

Embodiments of the present invention overcome these and other deficiencies of known products. The support mat and the FM are integrally interlocked to form a single entity, thereby eliminating the possibility of detachment and loss of product integrity. The single entity thus formed eliminates the need for additional layers in order to maintain the integrity of the TRM composite. Accordingly, the TRM composite of the invention does not require the stitching of layers above and/or below the support mat and fiber layer in order to hold the components together. In addition, the TRM composites of the invention prevent excessive soil losses while allowing grass and roots to grow therethrough, without retarding or inhibiting vegetation.

For the purposes of this application, layers that are integral to a product are, for example, integrally attached to one another, and can no longer be separated into individual layers. Layers that are integral to a product are not merely held in place by a reversible process, such as stitching or the like. As discussed above, the attachment may be accomplished by physical bonded interlocking, thermal bonding and/or chemical bonding.

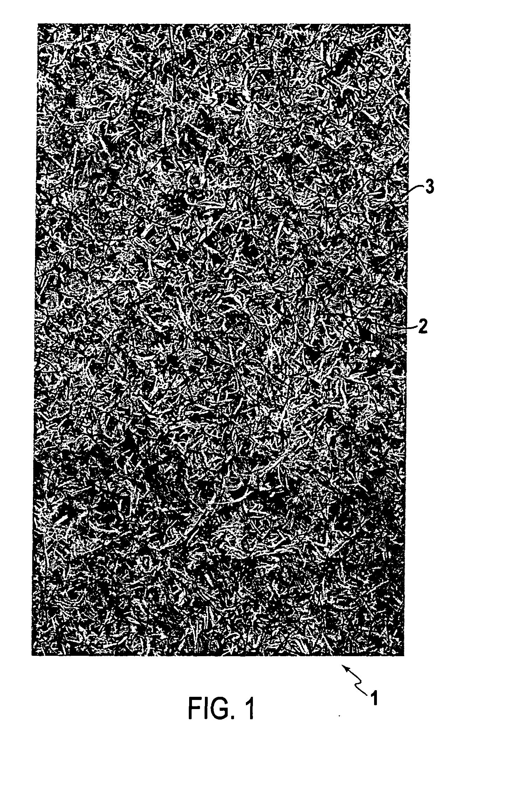

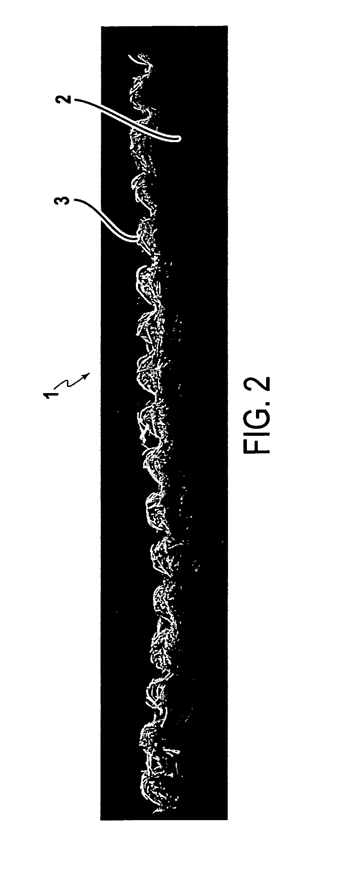

Referring to Figs. 1 and 2, an embodiment of a TRM composite 1 according to embodiments of the invention includes a FM 2 and a support mat 3. Preferably, at least some of the fibers of the FM 2 are integrally interlocked with at least some of the filaments of the support mat 3. In various embodiments, the FM is thermally bonded to the support mat, for example, by at least partially melting at least some synthetic filaments in the support mat, in order to bond intertwined fibers of the FM to filaments of the support mat. In various other embodiments, the FM is chemically bonded to the support mat, for example, by at least one bonding agent. In various other embodiments, the interlocking of the fibers with the filaments and self-bonding of the fibers is sufficient to integrally attach the FM to the support mat.

Preferably, the composite mat excludes stitching, netting, or the like to hold the FM in place and avoids the use of fabric (woven or non-woven), web and meshes used by known TRMs. However, stitching, netting, or the like may be used along with the integral intertwining and bonding, and fabric, web, meshes and other additional layers may be applied over the support mat. In embodiments, the TRM composite has a substantially uniform fiber density.

In various embodiments, TRM composites of the invention can be made by blending fibers, such as wood pulp, with at least one bonding agent to form a blend. The blend can then be spread on the support mat, thereby enabling the fibers of the blend to interlock with the filaments of the support mat. This interlocking assures an integral relationship between the blend and the support mat, thus forming a single, cohesive entity. Optionally, the blend and the support mat can be submitted to a thermal bonding process, involving melting at least some of the filaments of the support mat so that these filaments collapse over the fibers of the blend. This thermal bonding traps the fibers of the blend that are interlocked with the filaments of the support mat. Alternatively or additionally, the interlocked blend and support mat may be chemically bonded to themselves or to one another. The interlocking of the fibers of the blend and the filaments of the support mat assure integral attachment of the blend to the support mat, and stitching is not required for this attachment. The TRM composite of the invention can be made as one or more rolls, and can be cut into sections as needed.

In embodiments illustrated in Fig. 1, the FM 2 is positioned to directly contact soil. Upon hydration, the FM forms a permeable crust that protects newly sown seed and prevents soil loss. In embodiments, direct bonding of the FM to the soil can reduce the need for mechanical fastening, staking, pinning, pegging and stapling, although stakes, pins, pegs and staples can be used in conjunction with the bonding. Preferably, the protective micro-environment of the FM also enhances germination while lasting long enough for the vegetation to be established. In embodiments illustrated in Fig. 1, the TRM composite 1 can be produced in a factory-controlled environment that yields a high-quality, rolled, erosion control product (RECP). TRM composite of the invention generally exhibit a high resistance to shear stresses.

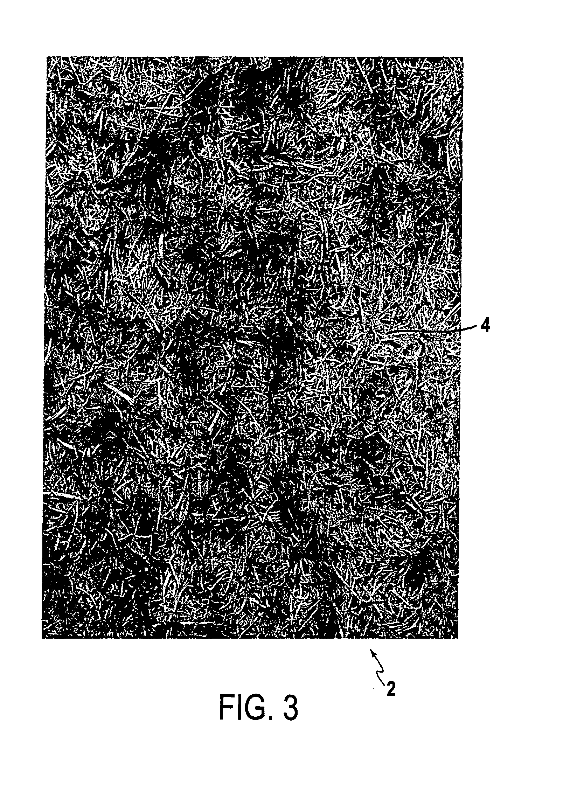

Referring to Fig. 3, an embodiment of a FM 2 of the TRM Composite 1 of Fig. 1 includes both natural and synthetic fibers 4 bonded with at least one bonding agent. In various embodiments, the FM 2 may also include at least one filler, at least one bonding agent, and optionally at least one of fertilizers, seeds and other additives. Some of the fibers may constitute a bonding agent, if desired.

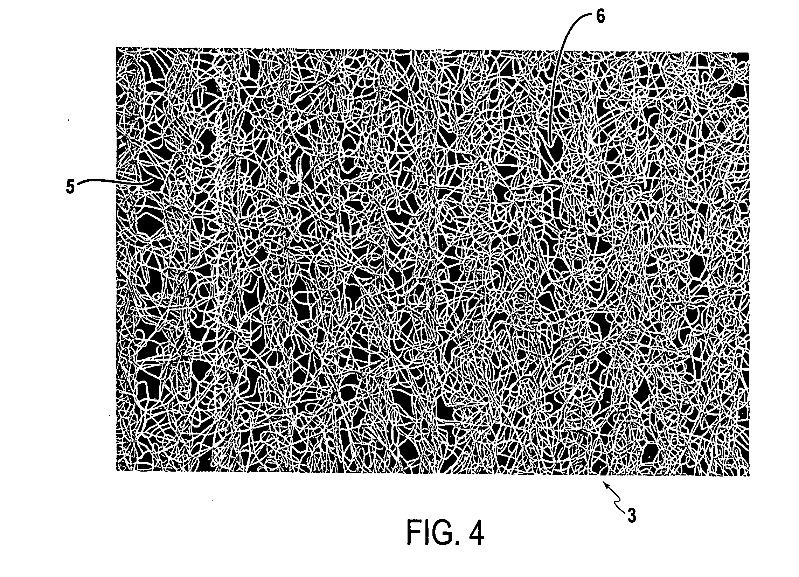

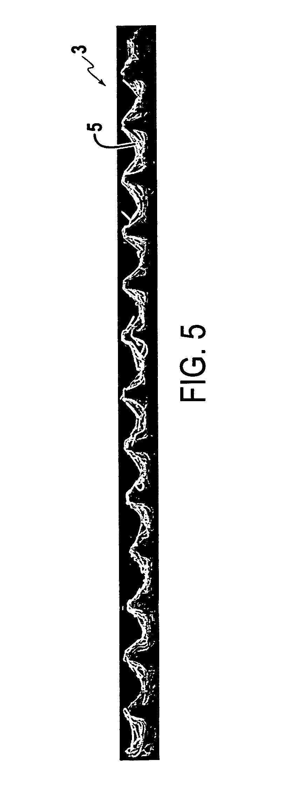

Referring to Figs. 4 and 5, an embodiment of a three-dimensional support mat 3 of the TRM Composite 1 of Fig. 1 includes a three-dimensional core of filaments 5 fused together at their interstices 6. In embodiments, the support mat may have a thickness of less than about 1.59 mm (1/16 inch). In embodiments, the support mat may have a thickness of about 1.59 mm to about 25.40 mm (1 inch). In embodiments, the support mat may have a thickness of at least about 3.18 mm (1/8 inch). In embodiments, the support mat may have a thickness of at least about 6.35 mm (1/4 inch). In embodiments, the support mat may have a thickness of at least about 12.70 mm (1/2 inch). In embodiments, the support mat may have a thickness of at least about 25.40 mm.

The support mat preferably has a geometry designed to enhance the micro-environment for seed germination and erosion protection. As demonstrated in Figs. 4 and 5, the support mat may have an entangled filament structure, in which the interstices of the filaments are randomly arranged throughout the three-dimensional support mat. Alternatively, the support mat may have a quilted geometry, cuspated geometry, square geometry, pyramid geometry, cylindrical geometry, spherical geometry, conical geometry, trapezoidal geometry, or any other custom geometry that at least does not hinder the germination process, and preferably enhances the microenvironment for seed germination and erosion protection.

Examples of three-dimensional core suitable for use as the support mat include, but are not limited to, ENKAMAT® support mats, which are manufactured by Colbond, Inc. of Enka, North Carolina. The ENKAMAT® support mats are three-dimensional cores comprised of filaments fused at their intersections. The filaments may be a polymer selected from polyethylene terephthalate, high-density polyethylene, polypropylene, polyethylene, polyester, nylon, or any other suitable polymer. When nylon filaments are used, the nylon filaments are preferably made of Nylon 6 (PA6) or Nylon 66, and contain a UV protector.

ENKAMAT® support mats have an open area, and are sufficient for mechanical soil filling or filling by natural sediment deposits through hydraulic flows. Various types of ENKAMAT® support mats are available and suitable for use in the present invention. These include standard ENKAMAT® support mats, especially suited for moderate subgrades, and flat-back ENKAMAT® support mats, especially suited for more severe grades. The support mat may be produced by apparatus and processes as disclosed in U.S. Patents Nos. Re 31,599, 4,342,807, and 4,252,590, the entire contents of which are herein incorporated by reference.

Embodiments of TRM composites of the invention are useful in all stages of germination. The FM functions prior to vegetation to prevent soil erosion by protecting and securing the soil against shearing forces. The FM also functions during germination of vegetation, and decomposes during this stage. After vegetation has germinated, and/or in a situation where there is no vegetation, the support mat functions to reinforce roots and/or turf. The TRM composite of the invention may be applied to a desired location, and may be maintained, repaired and replaced as needed.

In various exemplary embodiments, the TRM composite may be applied to steep slopes, banks, ditches, channels, spillways, berms, swells, landfills, shorelines, acid slopes, aquifer interceptors, bridge abutments, natural or man-made erosion-prone areas, or any areas where vegetation enhancement and permanent erosion/turf protection is desired.

In various embodiments, the TRM composite can be placed over a sloped area after the soil of a seed bed has been prepared. The TRM composite is preferably placed over the sloped area so that the FM is in contact with the soil of the seed bed. The TRM composite is then secured to the soil by, for example, hydrating and activating the bonding agent of the FM. Optionally, the TRM composite can be further secured by the addition of one or more mechanical fasteners, such as stakes, pins, pegs, staples and the like, and combinations thereof. In various exemplary embodiments, the TRM composite may be provided in roll form and applied to the sloped area by unrolling a length of the TRM composite sufficient to cover the sloped area. Alternatively, the TRM composite can be applied in sections. Before and/or after the TRM composite is installed over the sloped area of the seed bed, additional layers may be applied to the support mat, for example in rolls or by spraying, including hydromulch, broadcasting and the like.

While this invention has been described in conjunction with the exemplary embodiments outlined above, it is evident that many alternatives, modifications and variations will be apparent to those skilled in the art. Accordingly, the exemplary embodiments of the invention, as set forth above, are intended to be illustrative, not limiting. Various changes may be made without departing from the spirit and scope of the invention.

## Claims

1. A turf reinforcement mat composite, comprising a fiber matrix and a support mat, wherein the fiber matrix comprises fibers and the support mat comprises a three-dimensional core of filaments bonded or fused together at their intersections, wherein at least some of the fibers of the fiber matrix are interlocked with at least some filaments of the support mat, and wherein the fiber matrix is bonded to the support mat.

2. The turf reinforcement mat composite of claim 1, wherein the fiber matrix is at least one of thermally bonded and chemically bonded to the support mat.

3. The turf reinforcement mat composite of claim 1, wherein the fiber matrix is bonded to itself to interlock with filaments of the support mat.

4. The turf reinforcement mat composite of claim 1, wherein the bonding is activated by an activatable binder that becomes polymeric upon activation.

5. The turf reinforcement mat composite of claim 4, wherein the bonding is activated by hydration.

6. The turf reinforcement mat composite of claim 1, wherein a bonding agent holds the fiber matrix fibers together.

7. The turf reinforcement mat composite of claim 1, wherein a bonding agent holds the fiber matrix to the support mat.

8. The turf reinforcement mat composite of claim 1, wherein the fiber matrix is not stitched to the support mat.

9. The turf reinforcement mat composite of claim 1, wherein the fiber matrix is not held to the support mat by a mesh.

10. The turf reinforcement mat composite of claim 1, wherein the fibers are natural or synthetic fibers.

11. The turf reinforcement mat composite of claim 1, wherein the fibers are a combination of natural and synthetic fibers.

12. The turf reinforcement mat composite of claim 1, wherein the fiber matrix further comprises at least one member selected from the group consisting of fertilizers, seed and additives.

13. The turf reinforcement mat composite of claim 1, wherein the fiber matrix includes at least one additive selected from the group consisting of gel substances for water retention; trace elements; algicides; fungicides; insecticides; nematocides and growth regulators.

14. The turf reinforcement mat composite of claim 1, wherein the composite has a substantially uniform fiber density.

15. The turf reinforcement mat composite of claim 1, wherein the support mat has a thickness of less than about 1.59 mm.

16. The turf reinforcement mat composite of claim 1, wherein the support mat has a thickness of about 1.59 mm to about 25.40 mm.

17. The turf reinforcement mat composite of claim 1, wherein the support mat has a thickness of at least about 3.18 mm.

18. The turf reinforcement mat composite of claim 1, wherein the support mat has a thickness of at least about 6.35 mm.

19. The turf reinforcement mat composite of claim 1, wherein the support mat has a thickness of at least about 12.70 mm.

20. The turf reinforcement mat composite of claim 1, wherein the support mat has a thickness of at least about 25.40 mm.

21. The turf reinforcement mat composite of claim 1, wherein the filaments are selected from the group consisting of polypropylene, polyethylene, polyester, polyethylene terephthalate, high-density polyethylene, and nylon filaments.

22. The turf reinforcement mat composite of claim 21, wherein the filaments are nylon filaments.

23. The turf reinforcement mat composite of claim 22, wherein the nylon filaments are selected from the group consisting of Nylon 6 filaments and Nylon 66 filaments.

24. The turf reinforcement mat composite of claim 1, wherein the filaments contain a UV protector.

25. The turf reinforcement mat composite of claim 24, wherein the UV protector is an antioxidant.

26. The turf reinforcement mat composite of claim 1, wherein the support mat has a geometry selected from the group consisting of a quilted geometry, a cuspated geometry, a square geometry, a pyramid geometry, a cylindrical geometry, a spherical geometry, a conical geometry, a trapezoidal geometry, and a random arrangement.

27. The turf reinforcement mat composite of claim 26, wherein the geometry is a random arrangement.

28. The turf reinforcement mat composite of claim 1, wherein the composite has a high resistance to shear stresses, from approximately 3 psf (143.64 Pa) to approximately 10 psf (478.8 Pa) in the unvegetated state based on results obtained by tub testing or flume testing.

29. The turf reinforcement mat composite of claim 1, wherein the composite has a high resistance to shear stresses, greater than approximately 3 psf (143.64 Pa) in the unvegetated state based on results obtained by tub testing.

30. The turf reinforcement mat composite of claim 1, wherein the composite has a high resistance to shear stresses, greater than approximately 6 psf (287.28 Pa) in the unvegetated state based on results obtained by tub testing or flume testing.

31. The turf reinforcement mat composite of claim 1, wherein the composite has a high resistance to shear stresses, greater than approximately 8 psf (383.04 Pa) in the unvegetated state based on results obtained by tub testing.

32. The turf reinforcement mat composite of claim 1, wherein the fiber matrix and the support mat form an integral composite that does not unravel.

33. A method of making a turf reinforcement mat composite, comprising: interlocking at least some fibers of a fiber matrix with at least some filaments of a support mat that comprises a three-dimensional core of filaments bonded or fused together at their intersections, and bonding the fiber matrix to the support mat.

34. The method of claim 33, comprising: blending said fibers with at least one bonding agent to form a blend, and spreading the blend onto and into said support mat, thereby enabling fibers of the blend to integrally interlock with filaments of the support mat.

35. The method of claim 33, comprising at least one of thermally bonding and chemically bonding the blend to the support mat.

36. The method of claim 33, comprising bonding the fiber matrix to itself to interlock the fiber matrix with the support mat.

37. The method of claim 33, comprising bonding the fiber matrix to the support mat with an activatable binder that becomes polymeric upon hydration.

38. The turf reinforcement mat composite of claim 33, comprising bonding the fiber matrix to the support mat with a bonding agent that holds the fiber matrix fibers together.

39. The turf reinforcement mat composite of claim 33, wherein the bonding agent bonds the fiber matrix to the support mat.

40. The method of claim 33, comprising spraying a mix of fibers and at least one member selected from the group consisting of fertilizer, seed and a tackifier over the support mat to form said fiber matrix.

41. A method of reinforcing turf, comprising applying the turf reinforcement mat composite of claim 1 over an area, after soil of a seed bed has been prepared in said area, and optionally securing the turf reinforcement mat composite to the soil, wherein the fiber matrix is placed in contact with the soil.

42. The method of claim 41, wherein the turf reinforcement mat composite is applied in roll form by unrolling a length of the turf reinforcement mat composite sufficient to cover said area.

43. The method of claim 41, wherein the turf reinforcement mat composite is applied in sections by placing the sections over said area sufficient to cover said area.

44. The method of claim 41, wherein the step of securing comprises hydrating and activating the at least one bonding agent.

45. The method of claim 41, wherein the step of securing comprises applying at least one member selected from the group consisting of mechanical fasteners, stakes, pins, pegs, staples and combinations thereof.
